# EUROPÄISCHE PATENTSCHRIFT

(11) **EP 1 025 372 B1**
(45) Veröffentlichungstag und Bekanntmachung des Hinweises auf die Patenterteilung: **11.09.2002**
(21) Anmeldenummer: 98958878.5
(22) Anmeldetag: 29.10.1998
(51) Int. Cl.: F16D 65/16

(54) **BREMSENANORDNUNG FÜR EIN LANDFAHRZEUG**
BRAKING ARRANGEMENT FOR A LAND VEHICLE
SYSTEME DE FREINAGE POUR VEHICULE ROUTIER

(30) Priorität: 31.10.1997 DE 19748318
(43) Veröffentlichungstag der Anmeldung: 09.08.2000
(73) Patentinhaber: LUCAS INDUSTRIES PUBLIC LIMITED COMPANY, Solihull B90 4LA (GB)
(72) Erfinder: POERTZGEN, Gregor, D-56068 Koblenz (DE); WÖRSDORFER, Karl-Friedrich, D-55257 Budenheim (DE); ERBEN, Ralf, D-56132 Kemmenau (DE); ZENZEN, Guido, D-56290 Macken (DE)
(74) Vertreter: Schmidt, Steffen J., Dipl.-Ing.
(86) Internationale Anmeldenummer: EP9806850
(87) Internationale Veröffentlichungsnummer: WO99023395

(56) Entgegenhaltungen:
- DE-A- 3 423 510
- DE-A- 4 312 524
- DE-A- 19 611 910
- DE-C- 19 601 983
- US-A- 4 809 824
- US-A- 4 877 113
- US-A- 5 024 299

## Beschreibung

Die vorliegende Erfindung betrifft eine Bremsanordnung für ein Landfahrzeug nach dem Oberbegriff des Anspruchs 1. Eine solche Bremsanordnung ist aus US-A-4,877,113 bekannt. Insbesondere betrifft die vorliegende Erfindung eine Bremsenanordnung für ein Landfahrzeug, in dem die Bremsenanordnung elektrisch betätigbar ist. Bei derartigen Bremsenanordnungen, die auch "Brake-by-Wire"-Anordnungen genannt werden, besteht das Problem, mit hoher Dynamik Aufoder Zustellbewegungen der Reibelemente relativ zu der Bremsscheibe oder der Bremstrommel auszuführen. Dies gilt insbesondere während des Fahrbetriebes des Landfahrzeuges. Dabei sind außerdem hohe Zustellkräfte auszuüben um eine substantielle Verzögerung des Landfahrzeuges sicherzustellen.

Darüber hinaus besteht die Notwendigkeit, während des Stillstandes des Landfahrzeuges eine Parkbremsfunktion bereitzustellen, mit der verhindert wird, daß sich das Fahrzeug am Hang selbsttätig in Bewegung setzt.

Zwischen der Betriebsbremsenfunktion und der Parkbremsenfunktion besteht die widersprüchliche Anforderung, daß eine Parkbremse selbsthemmend sein muß, während eine Betriebsbremse nicht selbsthemmend sein darf. Aus diesem Grunde wurde bisher bei Brake-by-Wire-Anordnungen die Parkbremsenfunktion von der Betriebsbremsenfunktion getrennt realisiert. Dies ist unter anderem Bauraum- und Kostenintensiv.

Der vorliegenden Erfindung liegt die Aufgabe zugrunde, eine Bremsenanordnung bereitzustellen, bei der die Parkbremsenfunktion und die Betriebsbremsenfunktion in ein Stellaggregat für die Reibelemente integriert sind, wobei gleichzeitig gewährleistet ist, daß die Betriebsbremse keinesfalls in den Zustand der Selbsthemmung gelangen kann.

Die in Anspruch 1 beschriebene Bremsanordnung löst diese Aufgabe.

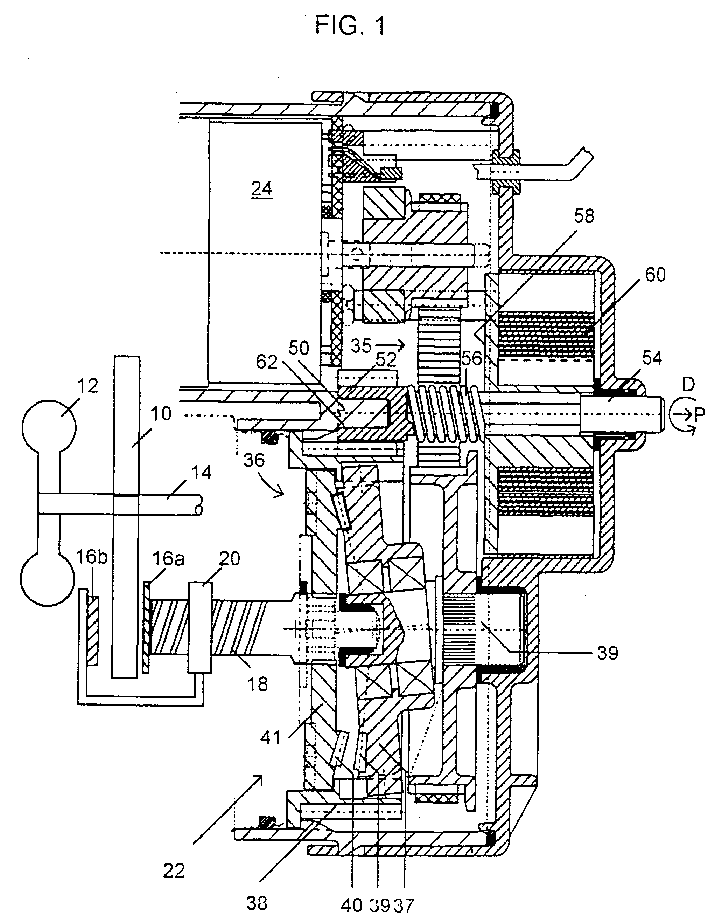

In der Figur 1 ist ein Stellaggregat einer Fahrzeugbremsanlage gezeigt, welches auf die Bremsscheibe 10 eines Rades 12 (nicht maßstäblich) wirkt, das über eine Welle 14 mit der Bremsscheibe drehfest verbunden ist. Die Bremsscheibe ist zwischen zwei Reibbelägen 16a, 16b aufgenommen.

Die Auf- bzw. Zustellbewegung der Reibbeläge 16a, 16b relativ zu der Bremsscheibe 10 wird über eine Spindel(18)-Muttern (20)-Anordnung bewirkt. Die Spindel 18 wird über eine nachstehend im Detail beschriebene Getriebeanordnung 22 durch einen Elektromotor 24 je nach Drehrichtung dieses Elektromotors 24 in eine zustellende oder eine aufstellende Rotation versetzt. Die Ansteuerung des Elektromotors erfolgt in einer nicht näher erläuterten Weise in Abhängigkeit von einem elektrischen Ansteuersignal welches von der Pedalstellung des Bremspedals des Landfahrzeuges bzw. von einer Betätigung eines Parkbremshebels abhängt.

Dabei hat in bevorzugter Weise die als Untersetzungsgetriebe ausgestaltete Getriebeanordnung 22 eine Gesamtuntersetzung von 200:1 und ist zweistufig ausgeführt. Dadurch ergibt sich ein kompakt bauendes Stellaggregat, wobei vor allem der Elektromotor 24 klein gewählt werden kann und dennoch eine ausreichend große Zuspannkraft aufgebracht werden kann. Dazu treibt der Elektromotor 24 über eine als Zahnriemengetriebe 35 ausgestaltete erste Untersetzungsstufe von 4:1 ein Taumelscheibengetriebe 36 an, das eine zweite Untersetzungsstufe von 50:1 bereitstellt. Das Taumelscheibengetriebe 36 weist einen Taumelkranz 37 auf, der in einem äußeren Stützkranz 38 unverdrehbar aufgenommen ist und an einem abgeschrägten Ende der Antriebswelle 39 anliegt, so daß eine Drehbewegung der Antriebswelle 39 den Taumelkranz 37 in eine Taumelbewegung versetzt. Der Taumelkranz 37 weist eine Stirnverzahnung 39 auf, die mit der Stirnverzahnung 40 eines Abtriebskranzes 41 in Eingriff steht, wobei der Abtriebskranz 41 mit der als Abtriebswelle wirkenden Spindel 18 kraftschlüssig verbunden ist. Bei stillstehendem äußeren Stützkranz 38 bewirkt die Taumelbewegung des Taumeikranzes 37, daß laufend andere Zähne der Stirnverzahnung 39 des Taumelkranzes 37 mit der Stirnverzahnung 40 des Abtriebskranzes 41 in Eingriff kommen. Weil die Zähnezahl Z1 der Stirnverzahnung des Abtriebskranzes 41 kleiner gewählt ist als die Zähnezahl Z2 des Taumelkranzes 37 ergibt sich dabei eine relative Drehbewegung des Abtriebskranzes 41 gegenüber dem stillstehenden Stützkranz 38 und zwar in entgegengesetzter Drehrichtung zur Antriebswelle 39. Es entsteht also eine Verdrehung des Abtriebskranzes 41 um die Differenz der Zähnezahlen der Stirnverzahnung des Taumelkranzes 37 und des Abtriebskranzes 41. Weist beispielsweise der Abtriebskranz 41 die Zähnezahl Z1 = 98 und der des Taumelkranzes 37 die Zähnezahl Z2 = 100 auf, so ergibt sich gemäß der Formel i = Z2/(Z1-Z2) die daraus resultierende Untersetzung i von 50:1.

Für die zweite Untersetzungsstufe kann anstelle des Taumelscheibengetriebes gleichfalls entweder ein unter dem Begriff "Cyclo-Getriebe" oder ein unter dem Begriff "Harmonic-Drive-System" bekanntes Getriebe eingesetzt werden, das unter anderem durch die DE 296 14 738 U1 bekannt ist. Auch dieser Getriebetyp weist einen stillstehenden Stützkranz auf, ebenso sind die An- und Abtriebsdrehrichtungen gegensinnig, wobei sich die Untersetzung aus der Differenz der Zähnezahl bzw. Umfangslänge eines unverdrehbaren gegenüber einem verdrehbaren Kranz bestimmt.

"Cyclo-Getriebe" zeichnen sich aus durch extrem hohe Drehmomentkapazität, sehr hohen Wirkungsgrad, hohe mögliche Übersetzungen und bis zu fünffacher Überlastsicherheit, was sich günstig zur Überwindung eines eventuell benötigten Losbrechmomentes an der Spindel-Muttern-Anordnung auswirkt. "Cyclo-Getriebe" sind Exzentergetriebe, deren Zahnrad-Außenprofil einen Zykloiden-Kurvenzug beschreibt. Dabei wird eine Scheibe über einen Exzenter angetrieben und wälzt sich in einem Ring ab. Versieht man die Scheibe mit einem geschlossenen Zykloidenzug und ersetzt den Ring durch kreisförmig angeordnete Bolzen, so wird dadurch Formschluß erreicht. Ein "Cyclo-Getriebe" hat drei sich bewegende Hauptbestandteile, die Antriebswelle mit dem Exzenter, die Kurvenscheiben und die Abtriebswelle. Der Doppelextender läuft mit Antriebsdrehzahl um und treibt über Rollenlager zwei um 180 Grad zueinander versetzte Kurvenscheiben an. Die Kurvenscheiben drehen sich also gleichzeitig um zwei verschiedene Achsen. Es entsteht Rotation mit verminderter Drehzahl in umgekehrter Richtung. Bei einer vollen Umdrehung des Exzenters wälzt sich jede Kurvenscheibe um einen Kurvenabschnitt weiter. In der Regel hat die Kurvenscheibe einen Zahn weniger als Bolzen im Bolzenring vorhanden sind. In diesen Fällen wird das Übersetzungsverhältnis durch die Anzahl der Kurvenabschnitte einer Kurvenscheibe bestimmt. Um die untersetzte Drehbewegung auf die Abtriebswelle zu übertragen, sind die Kurvenscheiben mit kreisförmig angeordneten Bohrungen versehen. Die Abtriebswelle hat eine koaxiale Mitnehmerscheibe, auf der sich kreisförmig angeordnete Mitnehmerbolzen befinden, die in die entsprechenden Bohrungen der Kurvenscheibe eingreifen. Auf den Mitnehmerbolzen und den Außenbolzen sind Rollen aufgesetzt, die für eine rein wälzende Kraftübertragung zwischen den Kurvenscheiben und Mitnehmerbolzen der Abtriebswelle sorgen.

Sowohl ein Taumelscheibengetriebe als auch ein Harmonic-Drive-Getriebe ermöglichen Untersetzungen bis zu 320:1. Dadurch kann die erste Untersetzungsstufe eingespart werden, um eine Untersetzung von 200:1 zu erreichen. Beispielsweise wäre dann anstelle der parallelen Anordnung von Elektromotor und Getriebe eine serielle Anordnung von Elektromotor und Getriebe zu bevorzugen, wobei der Elektromotor unmittelbar die Antriebswelle des Getriebes antreibt.

Wesentlich für ein Taumelscheibengetriebe und das aus der DE 296 14 738 U1 bekannte Getriebe ist, daß das Getriebe in Rückwärtsdrehrichtung selbsthemmend ist, was bedeutet, daß keine noch große dem Antrieb entgegenwirkende Kraft in der Lage ist, die Antriebswelle rückwärts zu drehen. Das bedeutet aber auch, daß die Antriebswelle in der einen oder anderen Richtung verändert werden kann.

Da die Spindel-Mutter-Anordnung 18/20 selbsthemmend ausgeführt ist, bleibt die beim Feststellen erreichte Stellung der Spindel-Mutter-Anordnung 18/20 auch nach Abschalten des Elektromotors 24 erhalten.

Der Stützkranz 38 ist wie vorstehend beschrieben in der Ruhestellung der Anordnung unverdrehbar. Mittels der nachstehend beschriebenen Ausgestaltung ist es möglich, auch bei an sich stillstehendem Taumelscheibengetriebe eine Rückwärtsdrehung und damit Aufstellbewegung der Reibbeläge 16a, 16b (über die Spindel-Muttern-Anordnung 18, 20) zu erreichen.

An einem Lagerzapfen 50 ist ein Ritzel drehbar und in Richtung des Pfeils P auch axial verschiebbar angeordnet, das mit einer Außenverzahnung des Stützkranzes 38 kämmt. Dieses Ritzel 52 ist mit einer Zugstange 54 starr verbunden. Dabei ist das Ritzel 52 mittels einer um die Zugstange 54 gewickelten Schraubenfeder 56 entgegen der Richtung des Pfeils P gegen eine Wand 58 vorgespannt. Darüber hinaus ist um die Zugstange 54 eine Spiralfeder 60 geschlungen, welche als Drehfederspeicher wirkt.

Am Fuß des Lagerzapfens 50 ist eine Säge-Verzahnung angeformt, so daß bei einer axialen Bewegung der Zugstange 54 in Richtung des Pfeils P der aufgeladene Federspeicher 60 das Ritzel 52 in Drehrichtung D in Rotation versetzen kann. Die Sägeverzahnung 62 bewirkt in eingerücktem Zustand des Ritzels 52 (durch die Schraubenfeder 56 belastet), daß sich das Ritzel 52 nicht drehen kann. Damit ist der Stützkranz 38 im Normalfall unverdrehbar.

Die Bremsenanordnung funktioniert wie folgt:

Bei einer Bestromung des Elektromotors 24 wird über die Getriebeanordnung die Spindel-Mutter-Anordnung 18, 20 in Rotation versetzt, so daß die Reibbeläge 16a, 16b eine Zustellbewegung in Richtung auf die Bremsscheibe 10 ausführen.

Bei entgegengesetzter Bestromung des Elektromotors 24 wird über die Getriebeanordnung die Spindel-Muttern-Anordnung 18, 20 in entgegengesetzte Rotation versetzt, so daß die Reibbeläge 16a, 16b eine Aufstellbewegung in Richtung von der Bremsscheibe 10 weg ausführen.

Wird die Zugstange 54 in Richtung des Pfeils P betätigt, kommt das Ritzel 52 von der Sägeverzahnung am Fuß des Lagerzapfens 50 frei, so daß sich die Zugstange 54 vermittels des aufgeladenen Federspeichers 60 in Rotation versetzt. Dies hat zur Folge, daß das starr mit der Zugstange 54 verbundene Ritzel 52 den Stützkranz 38 in Rotation versetzt. Dadurch wird eine Drehbewegung der Spindel 18 bewirkt, so daß die Mutter 20 die Reibbeläge 16a, 16b von der Bremsscheibe 10 wegbewegt. Der zuletzt beschriebene Vorgang findet im Fall eines Lösens der Feststellbremse oder bei einer Notbetätigung statt. Damit ist die Feststellbremsenfunktion auch ohne elektrische Betätigung lösbar.

Zum Aufladen des Federspeichers 60 wird (z.B. elektromagnetisch betätigt) die Zugstange 54 in Richtung des Pfeils P bewegt und gleichzeitig der Elektromotor 24 betätigt. Auf diese Weise fängt der Stützkranz 38 an sich zu drehen und nimmt dabei das Ritzel in entgegengesetzter Drehrichtung mit, wodurch die Spindel Mutter-Anordnung auf Anschlag gelangt, beispielsweise indem die Reibbeläge an der Bremsscheibe zur Anlage kommen. Dies hat zur Folge, daß das vom Elektromotor aufgebrachte Drehmoment dazu aufgewandt wird, daß der Federspeicher 60 im Sinne einer Energieaufladung gespannt wird.

## Patentansprüche

1. Bremsanordnung für ein Landfahrzeug mit folgenden Merkmalen:
- einem Elektromotor (24), dem ein Untersetzungsgetriebe (22) nachgeschaltet ist, dessen Ausgang (41) mit dem Eingang (18) einer Auf-/Zuspannvorrichtung (18, 20) verbunden ist, die auf Reibbeläge (16a; 16b) einer Bremsenanordnung wirkt,
**dadurch gekennzeichnet, daß**
- das Untersetzungsgetriebe (22) selbsthemmend ausgestaltet ist, und
- ein Betätigungsmechanismus (38, 52, 54, 60) vorgesehen ist, mit dem die Selbsthemmung des Untersetzungsgetriebes (22) aufgehoben oder hergestellt sowie eine Öffnungsbewegung der Auf-/Zuspannvorrichtung (18, 20) im Sinne einer Freistellung der Reibbeläge (16a, 16b) von einer Bremsscheibe (10) ausgeführt werden kann.

2. Bremsanordnung für ein Landfahrzeug nach Anspruch 1, bei dem im Stillstand des Landfahrzeuges und bei unbestromtem Elektromotor (24) der Betätigungsmechanismus (38, 52, 54, 60) in Selbsthemmungsstellung ist.

3. Bremsanordnung für ein Landfahrzeug nach Anspruch 1 oder 2, bei dem bei betätigtem Betätigungsmechanismus (38, 52, 54, 60) die Selbsthemmung aufgehoben ist, und
für die Öffnungsbewegung eine aus einem vorzugsweise als Federspeicher (60) ausgeführten Energiespeicher eine Antriebskraft bereitgestellt wird, die vorzugsweise rotatorisch, aber auch translatorisch auf das Untersetzungsgetriebe (22) wirken kann.

4. Bremsanordnung für ein Landfahrzeug nach Anspruch 3, bei der die Aufladung des Energiespeichers durch eine Betätigung des Elektromotors (24) im Normalbetrieb erfolgt.

## Claims

1. A brake arrangement for a land vehicle with the following characteristics:
- an electric motor (24) with a downstream connected reduction gear (22) whose output (41) is connected with the input of a release/application apparatus (18, 20) which acts upon friction pads (16a, 16b) of a brake arrangement,
**characterised in that**
- the reduction gear (22) is designed self-locking and
- an actuation mechanism (38, 52, 54, 60) is provided by means of which the self-locking function of the reduction gear (22) can be cancelled or established as well as an opening movement of the release/application apparatus (18, 20) in the sense of a clearance of the friction pads (16a, 16b) from a brake disk (10) can be performed.

2. The brake arrangement for a land vehicle according to Claim 1, wherein the actuation mechanism (38, 52, 54, 60) is in the self-locking position with the land vehicle being immobilised and the electric motor (24) being currentless.

3. The brake arrangement for a land vehicle according to Claim 1 or 2, wherein the self-locking function is cancelled with the actuation mechanism (38, 52, 54, 60) being operated, and for the opening movement a driving force is provided from an energy accumulator preferably designed as spring accumulator (60), which may preferably act rotatably but also translatorily on the gear mechanism (22).

4. The brake arrangement for a land vehicle according to Claim 3, wherein charging of the energy accumulator is effected by an activation of the electric motor (24) under normal operating conditions.

## Revendications

1. Dispositif de freinage pour un véhicule routier, présentant les caractéristiques suivantes :
- un moteur électrique (24), en aval duquel est couplé une transmission de démultiplication (22), dont la sortie (41) est reliée à l'entrée (18) d'un dispositif de desserrage/serrage (18, 20) agissant sur des garnitures de friction (16a; 16b) d'un dispositif de freinage,
**caractérisé en ce que**
- la transmission de démultiplication (22) est de type autoblocant, et
- un mécanisme d'actionnement (38, 52, 54, 60) est prévu, à l'aide duquel l'autoblocage de la transmission de démultiplication (22) est supprimé ou établi, et à l'aide duquel un déplacement d'ouverture du dispositif de desserrage/serrage (18, 20) dans le sens d'un dégagement des gamitures de friction (16a, 16b) d'un disque de frein peut être effectué.

2. Dispositif de freinage pour un véhicule routier selon la revendication 1, dans lequel, lorsque le véhicule routier est à l'arrêt et lorsque le moteur électrique (24) n'est pas alimenté en courant électrique, le mécanisme d'actionnement (38, 52, 54, 60) est en position d'autoblocage.

3. Dispositif de freinage pour un véhicule routier selon la revendication 1 ou 2, pour lequel, lorsque le mécanisme d'actionnement (38, 52, 54, 60) est actionné, l'autoblocage est supprimé, et pour le déplacement d'ouverture, est fournie une force d'entraînement provenant d'un accumulateur d'énergie réalisé de préférence sous la forme d'accumulateur à ressort (60), la force pouvant agir de préférence en rotation, mais également en translation, sur la transmission de démultiplication (22).

4. Dispositif de freinage pour un véhicule routier selon la revendication 3, dans lequel l'armement de l'accumulateur d'énergie s'effectue par un actionnement du moteur électrique (24) en fonctionnement normal.
